# EUROPEAN PATENT APPLICATION

(11) **EP 2 163 727 A2**
(43) Date of publication of application: **17.03.2010**
(21) Application number: 09169461.2
(22) Date of filing: 04.09.2009
(51) Int. Cl.: F01D 5/28

(54) **Laser shock peening of turbine airfoils**

(30) Priority: 11.09.2008 US 208369
(71) Applicant: General Electric Company, Schenectady, NY 12345 (US)
(72) Inventor: Delvaux, John McConnell, Greer, SC 29650 (US); Ganesh, Swami, Clifton Park, NY 12065 (US)
(74) Representative: Gray, Thomas

(57) **Abstract**

A laser shock peened turbine airfoil (120) and a method of laser shock peening an airfoil (120) of a turbine blade (100) is provided.The blade (100) includes a root (190) and an airfoil (120) with a leading edge (160) attached to the root (190). The blade (100) includes a laser shock peened root patch (250) extending along the leading edge (160) and the root (190).

## Description

### TECHNICAL FIELD

The present application relates generally to gas turbine engines and more particularly relates to a turbine airfoil and a method of laser shock peening about the root of an airfoil.

### BACKGROUND OF THE INVENTION

Damage to the surface of a gas turbine airfoil may come from many sources. These sources may include, but are not limited to, damage caused by tip rubs, water wash erosion, crevice corrosion, pitting, foreign object damage, dovetail wear, etc. These damage mechanisms may significantly reduce the vibratory strength of an airfoil as they may produce stress risers at the damage site. Vibratory response is a common phenomenon from the interaction of unsteady air pressure loads and the airfoil mode shape. The airfoil designs therefore should be able to withstand these vibratory stresses for exceedingly long periods of time before necessitating routine inspection and maintenance.

Current compressor airfoil designs may accomplish these durability goals by optimizing the distribution of airfoil thickness and chord. These current designs also may employ the use of generous fillets in high stress transition regions such as at the airfoil root and attachment.

One method of further enhancing airfoil durability is through the use of laser shock peening techniques. As is known, laser shock peening is a process for producing a region of deep compressive residual stresses on the surface of a metal article. Specifically, laser shock peening typically uses one or more radiation pulses from high and low power pulsed lasers to produce an intense shockwave at the surface of an article. The pulsed laser beam produces a strong localized compressive force on a portion of the surface. These deep and compressive stresses in the article generated by laser shock peening thus may result in improved fatigue strength. As such, treating an airfoil may provide improved immunity within the treated area against the damaging effects of erosion, corrosion, and foreign/domestic object damage and other types of surface damage.

Laser shock peening, however, has not been used about the leading edge of an airfoil root on the belief that the tensile residual stresses may combine with the typical high mean stresses in the airfoil. Such stress combinations may promote damage or even failure of the airfoil as opposed to improving fatigue strength. As such, airfoil root stresses and damage generally remain a concern and hence the subject of routine inspection.

These stress and damage concerns are particularly at issue about an R0 compressor blade. The R0 blade is the front or the first stage compressor blade. The R0 blade thus may face more potential damage than the other blade stages given this positioning.

Thus, there is a desire for an improved airfoil and an improved method of laser shock peening an airfoil, including the root portion, so as to provide improved durability. This improved durability should improve overall system reliability and efficiency.

### SUMMARY OF THE INVENTION

The present application thus provides a blade for rotating equipment. The blade includes a root and an airfoil with a leading edge attached to the root. The blade may include a laser shock peened root patch extending along the leading edge and the root.

The present application further provides a method of laser shock peening a blade for a turbine. The method includes the steps of applying laser shock peening to a leading edge of the blade about a root thereof and applying laser shock peening to the root of the blade about the leading edge thereof.

The present application further provides a blade for rotating equipment. The blade may include a root and an airfoil with a leading edge attached to the root. A laser shock peened root patch extends along the leading edge and the root and a leading edge laser shock peened area extends along the leading edge.

These and other features of the present application will become apparent to one of ordinary skill in the art upon review of the following detailed description when taken in conjunction with the drawings and the appended claims.

### BRIEF DESCRIPTION OF THE DRAWINGS

There follows a detailed description of embodiments of the invention by way of example only with reference to the accompanying drawings, in which:
Fig. 1 is a perspective view of a known airfoil.
Fig. 2 is a perspective view of an airfoil with several areas treated by laser shock peening; and
Fig. 3 is a perspective view of the root portion of the airfoil of Fig. 2 as treated by laser shock peening as is described herein.

### DETAILED DESCRIPTION

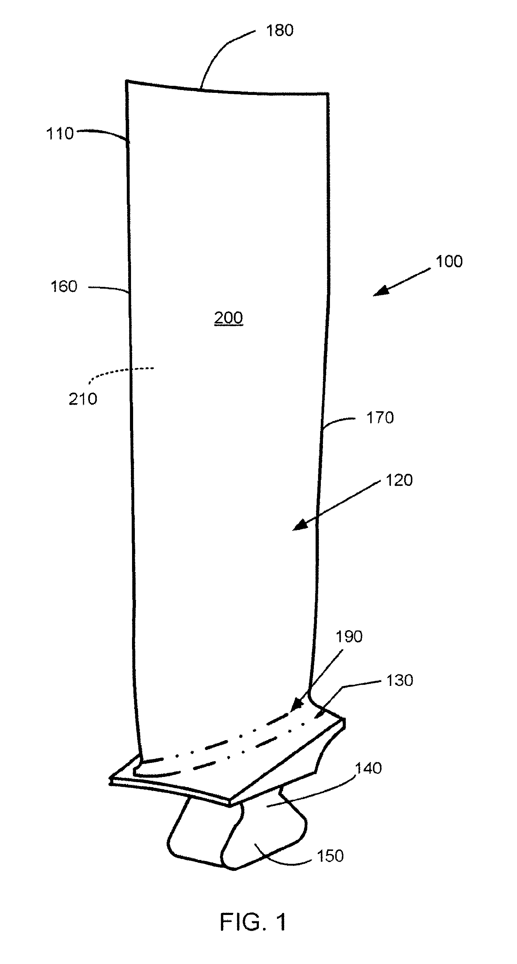

Referring now to the drawings, in which like numerals refer to like elements throughout the several views, Fig. 1 shows a blade 100 as may be described herein. In this example, the blade 100 may be an R0 compressor blade 110. Other blades 100 also may be used herein. As described above, an R0 compressor blade refers to the first stage compressor blade in, for example, an F Class turbine sold by the General Electric Company of Schenectady, New York. The blade 100, however, may be used with any type of rotating equipment in any location. The blade 100 may be made out of an alloy based on titanium, iron, nickel, or combinations thereof. The blade 100 may be made out of other types of materials.

The blade 110 may include an airfoil 120, a platform 130, and a shank 140. The shank 140 may include a dovetail 150 for positioning the blade 110 within a slot of a rotating disk (not shown). The airfoil 120 may have a leading edge 160, a trailing edge 170, a tip 180, and a root 190. The airfoil 120 also includes a suction side 200 and an opposing pressure side 210. Other designs and configurations may be used herein.

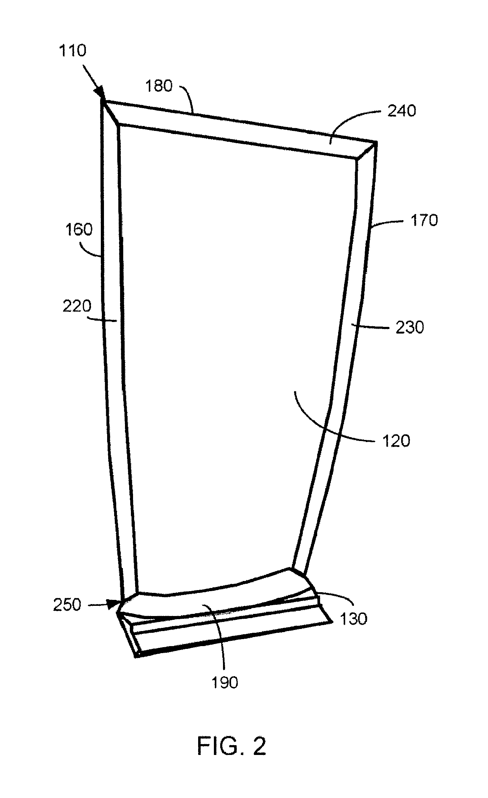

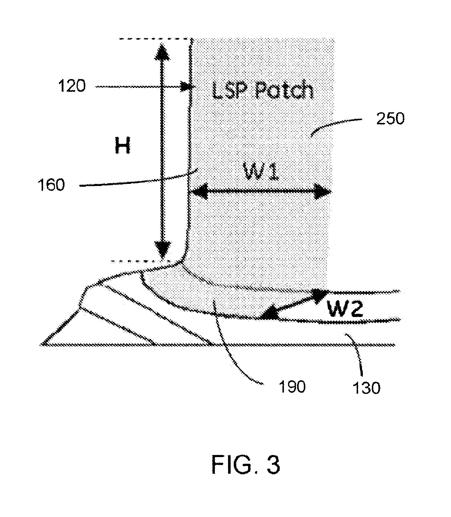

As is shown in Fig. 2, known laser shock peening techniques have been applied to the leading edge 160 of the blade 100 to form a leading edge treated area 220, to the trailing edge 170 to create a trailing edge treated area 230, and to the tip 180 to create a tip treated area 240. As is shown in Fig. 3, the blade 110 described herein also may include a root treated area or patch 250. The root patch 250 includes treatment of the root portion 190 of the leading edge 160. Specifically, the root patch 250 extends around the surface of the leading edge 160 onto the root 190 about the platform 130. The metal thicknesses about the intersection of the root 190 and the platform 130 should be sufficient so as to support the laser shock peening tensile load. As such, the blade 100 as a whole should not suffer significant loss in structural integrity from the tensile stresses produced by the laser shock peening techniques.

Specifically, the root patch 250 may extend on to the root 190, both sides of the leading edge 160 about the root 190, and then up the leading edge 160 in whole or in part. In this example, the root patch 250 may extend about 0.1 to about 0.2 inches (about 0.25 to about 0.5 centimeters) into the root 190, about 0.35 to about 0.45 inches (about 0.89 to about 1.14 centimeters) on both sides of the leading edge 160, and about two inches (about 5.1 centimeters) or more up the leading edge 160. Other dimensions and configurations may be used herein.

As described above, the laser creates pressure pulses of about one million pounds per square inch (about 70,300 kilograms per square centimeter) on the metal surface. These pressure pulses send shockwaves through the patch 250. Multiple firings in a predefined surface pattern may impart a layer of residual compressive stress on the surface that is substantially deeper (as much as twenty times or more) than may be attainable from conventional peening techniques. Deeper levels of compressive stress may provide greater resistance to fatigue and corrosion failure. Laser shock peening thus provides a deep compressive layer with minimal cold working that increases resistance to failure mechanisms such a fatigue, fretting fatigue, stress corrosion, and the like. A secondary benefit may be that thermal relaxation of the residual stresses of a laser peening surface is less than a shock peening surface due to the reduced cold work that is generally involved.

Laser shock peening thus may provide a significant improvement in fatigue resistance as well as tolerance to significant damage depth well in excess of about 0.030 inches (about 0.762 millimeters) without any loss of fatigue capability as compared to conventional shot peening that would suffer significant loss in fatigue resistance even with damage as shallow as about 0.005 inches (about 0.127 millimeters). The damage referred to here may stem from manufacturing, assembly, handling or turbine operation from causes such as foreign object damage; domestic object damage; water droplet erosion; solid particle erosion; corrosion pitting; stress corrosion cracking; fretting wear; sliding wear; tip rub wear; manufacturing defects associated with the melting, forging, heat treatment and machining of the turbine components; and handling or machining damage such as gouges and notches.

The techniques described herein may be used with a new, a used, or even a somewhat damaged blade 110. Specifically, the laser shock peening techniques as described herein may increase the amount of vibratory stress needed to fail a blade 110 with nicks, dings, or erosion to a level greater than that of even a new blade 110 without laser shock peening.

The combination of conventional shot peening with laser shock peening also may provide additional benefits. For example, the entire airfoil 120 may be subject to traditional shot peening while only some areas, such as the areas 220-250, also may be laser shock peened. Other configurations may be used herein.

It should be apparent that the foregoing relates only to certain embodiments of the present application and that numerous changes and modifications may be made herein by one of ordinary skill in the art without departing from the general spirit and scope of the invention as defined by the following claims and the equivalents thereof.

Various aspects and embodiments of the present invention are defined by the following numbered clauses:
1. A blade for rotating equipment, comprising:
   a root;
   an airfoil attached to the root;
   the airfoil comprising a leading edge; and
   a laser shock peened root patch extending along the leading edge and the root.
2. The blade of clause 1, wherein the laser shock peened root patch further comprises a shot peened root patch.
3. The blade of clause 1, wherein the leading edge comprises a leading edge treated area.
4. The blade of clause 3, wherein the leading edge treated area extends from the laser shock peened root patch.
5. The blade of clause 3, wherein the leading edge treated area is separated from the laser shock peened root patch.
6. The blade of clause 1, wherein the airfoil comprises a trailing edge and wherein the trailing edge comprises a trailing edge treated area.
7. The blade of clause 1, wherein the airfoil comprises a tip and wherein the tip comprises a tip treated area.
8. A method of laser shock peening a blade for a turbine, comprising:
   applying laser shock peening to a leading edge of the blade about a root thereof; and
   applying laser shock peening to the root of the blade about the leading edge thereof.
9. The method of clause 8, further comprising applying laser shock peening to another portion of the leading edge of the blade.
10. The method of clause 9, wherein the other portion of the leading edge of the blade comprises the entire leading edge.
11. The method of clause 8, further comprising applying laser shock peening to a trailing edge of the blade.
12. The method of clause 8, further comprising applying laser shock peening to a tip of the blade.
13. The method of clause 8, further comprising applying shock peening to the blade.
14. The method of clause 8, wherein the step of applying laser shock peening to a leading edge of the blade about a root thereof comprises applying laser shock peening to a new blade.
15. The method of clause 8, wherein the step of applying laser shock peening to a leading edge of the blade about a root thereof comprises applying laser shock peening to a used blade.
16. A blade for rotating equipment, comprising:
   a root;
   an airfoil attached to the root;
   the airfoil comprising a leading edge;
   a laser shock peened root patch extending along the leading edge and the root; and
   a leading edge laser shock peened area extending along the leading edge.
17. The blade of clause 16, wherein the leading edge laser shock peened extends from the laser shock peened root patch.
18. The blade of clause 16, wherein the leading edge laser shock peened is separated from the laser shock peened root patch.
19. The blade of clause 16, wherein the airfoil comprises a trailing edge and wherein the trailing edge comprises a trailing edge treated area.
20. The blade of clause 16, wherein the airfoil comprises a tip and wherein the tip comprises a tip treated area.

## Claims

1. A blade (100) for rotating equipment, comprising:
a root (190);
an airfoil (120) attached to the root (190);
the airfoil (120) comprising a leading edge (160); and
a laser shock peened root patch (250) extending along the leading edge (160) and the root (190).

2. The blade (100) of claim 1, wherein the laser shock peened root patch (250) further comprises a shot peened root patch.

3. The blade (100) of claim 1 or 2, wherein the leading edge (160) comprises a leading edge treated area (220).

4. The blade (100) of claim 3, wherein the leading edge treated area (220) extends from the laser shock peened root patch (250).

5. The blade (100) of claim 3, wherein the leading edge treated area (220) is separated from the laser shock peened root patch (250).

6. The blade (100) of any of the preceding claims, wherein the airfoil (120) comprises a trailing edge (170) and wherein the trailing edge (170) comprises a trailing edge treated area (230).

7. The blade (100) of any of the preceding claims, wherein the airfoil (120) comprises a tip (180) and wherein the tip (180) comprises a tip treated area (240).

8. A method of laser shock peening a blade (100) for a turbine, comprising:
applying laser shock peening to a leading edge (160) of the blade (100) about a root (190) thereof; and
applying laser shock peening to the root (190) of the blade (100) about the leading edge (160) thereof.

9. The method of claim 8, further comprising applying shock peening to the blade (100).

10. The method of claim 9, wherein the other portion of the leading edge (160) of the blade (100) comprises the entire leading edge (160).

11. A blade for rotating equipment, comprising:
a root;
an airfoil attached to the root;
the airfoil comprising a leading edge;
a laser shock peened root patch extending along the leading edge and the root; and
a leading edge laser shock peened area extending along the leading edge.

12. The blade of claim 11, wherein the leading edge laser shock peened extends from the laser shock peened root patch.

13. The blade of claim 11, wherein the leading edge laser shock peened is separated from the laser shock peened root patch.

14. The blade of any of claims 11 to 13, wherein the airfoil comprises a trailing edge and wherein the trailing edge comprises a trailing edge treated area.

15. The blade of any of claims 11 to 14, wherein the airfoil comprises a tip and wherein the tip comprises a tip treated area.
